# EUROPÄISCHE PATENTSCHRIFT

(11) **EP 0 575 843 B1**
(45) Veröffentlichungstag und Bekanntmachung des Hinweises auf die Patenterteilung: **08.05.1996**
(21) Anmeldenummer: 93109437.9
(22) Anmeldetag: 14.06.1993
(51) Int. Cl.: G01D 5/249, G01D 5/34

(54) **Drehwinkelmesssystem**
Angular measurement system
Système de mesure angulaire

(30) Priorität: 23.06.1992 DE 4220502
(43) Veröffentlichungstag der Anmeldung: 29.12.1993
(73) Patentinhaber: MAX STEGMANN Gmbh ANTRIEBSTECHNIK - ELEKTRONIK, D-78166 Donaueschingen (DE)
(72) Erfinder: Siraky, Josef, Dipl.-Ing., D-7710 Donaueschingen 13 (DE)
(74) Vertreter: Patentanwälte Westphal, Buchner, Mussgnug Neunert, Göhring

(56) Entgegenhaltungen:
- EP-A- 0 276 402
- EP-A- 0 318 597
- WO-A-92/04776
- DE-A- 4 014 479
- FR-A- 2 214 389

## Beschreibung

Die Erfindung betrifft ein Drehwinkelmeßsystem gemäß dem Oberbegriff des Anspruchs 1.

In zunehmendem Maße werden Wechselstrommotoren als Servoantriebe eingesetzt. Servoantriebe sind rotatorische Aktoren, die in der Lage sind, eine Drehzahl in beide Drehrichtungen zu fahren und auf einen bestimmten Drehwinkel zu positionieren. Es werden dabei sowohl synchrone als auch asynchrone Motoren eingesetzt. Bei beiden Motorenarten muß für den Einsatz als Servomotor sowohl die Information über die Drehzahl als auch die Information über den Drehwinkel ausgewertet und zur Steuerung des Motors rückgemeldet werden.

Zur Erfassung der Information über den Drehwinkel hat sich in den letzten Jahren der Resolver bewährt. Dieser ermittelt elektromagnetisch die Position des Rotors innerhalb einer Umdrehung absolut. Da der Resolver eine Trägerfrequenz von üblicherweise 400 bis 5000 Hz benötigt, ist sein Verhalten entsprechend träge. Weiter wird in der Auswerte-elektronik die Geschwindigkeitsinformation durch Differenzieren der Winkelinformation gewonnen, was aufgrund der relativ geringen Auflösung zu einem nur bescheidenen Anforderungen genügenden Geschwindigkeitssignal führt, welches zudem noch einen Tiefpaßcharakter hat.

Weiter sind absolute Winkelcodierer bekannt, bei welchen die in digital codierter Form auf dem Rotor angebrachte Winkelposition optisch abgetastet wird. Die Winkelposition und die daraus abgeleitete Winkelgeschwindigkeit stehen somit jederzeit in digital codierter Form zur Verfügung. Da hierbei jedoch ständig das mehrstellige digitale Wort der Winkelposition ausgewertet werden muß, sind diese Systeme aufwendig und träge.

Eine einfachere Ausführung des absoluten Winkelcodierers ist aus der den Oberbegriff bildenden EP-A-0 318 597 bekannt. Bei diesem Winkelcodierer weist der scheibenförmige Rotor mehrere konzentrische Spuren auf, die in zugeordneten optischen Aufnehmern jeweils zwei sinusförmige, in der Phase um 90° gegeneinander versetzte elektrische Signale erzeugen. Die Teilung jeder Spur ist dabei ein ganzzahliges Vielfaches der Teilung der jeweils vorhergehenden Spur und jedem Winkelwert einer Spur ist eindeutig eine Periode der Signale der jeweils nachfolgenden Spur zugeordnet. Die analogen Signale der Spuren werden in digitale Werte umgewandelt und zu einem die absolute Winkelposition des Rotors darstellenden digitalen Wort aneinander gefügt. Mit einer wesentlich geringeren Anzahl von Spuren kann auf diese Weise die absolute Winkelposition bestimmt und als mehrstelliges digitales Wort ausgegeben werden. Da auch hier ständig das mehrstellige digitale Wort der Winkelposition ausgewertet wird, ist auch dieses System träge.

Weiter sind inkrememtale Drehwinkelmeßsysteme bekannt. Bei diesen Systemen trägt der Rotor eine Inkrementalspur mit der Maßverkörperung in einer der gewünschten Winkelauflösung entsprechenden Teilung. Diese Inkrementalspur wird vorzugsweise optisch abgetastet, wodurch einerseits die Winkelgeschwindigkeitsinformation erhalten wird und andererseits durch Zählen der digitalen Inkremente die jeweilige absolute Winkelposition gewonnen werden kann. Um die Winkelauflösung der Inkrementalspur zu verbessern, ist es aus der DE 34 20 600 C2 bekannt, die Abtastung der Inkrementalspur durch den Aufnehmer so zu gestalten, daß sich analoge annähernd sinusförmige elektrische Signale mit einer der Teilung der Inkrementalspur entsprechenden Periode ergeben. Durch Interpolation des Spannungssignals ist eine Verbesserung der Auflösung wirtschaftlich um bis zu einem Faktor 4096 möglich. Die Inkrementalspur wird dabei durch den Aufnehmer so abgetastet, daß zwei in der Phase gegeneinander versetzte elektrische Signale erhalten werden, vorzugsweise zwei um 90° versetzte Signale, d.h. ein Sinus- und ein Kosinus-Signal. Dadurch ist auch die Drehrichtung bestimmbar.

Bei den inkrementalen Drehwinkelmeßsystemen ist es für die Bestimmung der absoluten Winkelposition notwendig, eine Referenz-Markierung für den Nullpunkt der Zählung der Inkremente zu bestimmen. Dies ist nachteilig, da beim Start stets zunächst die Referenz-Markierung angefahren werden muß. Dabei ist das Anfahren nur bei einem Asynchron-Motor möglich, während ein Synchron-Motor für ein definiertes Anfahren bereits eine absolute Winkelinformation benötigt. Um den Weg für das Anfahren der Referenz-Markierung möglichst klein zu halten, ist bei einem aus der DE 37 37 278 C2 bekannten Drehwinkelmeßsystem der eingangs genannten Gattung eine Spur mit einer Vielzahl von Referenz-Markierungen vorgesehen, so daß beim Start nur ein kleiner Drehwinkel gefahren werden muß, um bei Erreichen der nächsten Referenz-Markierung die absolute Winkelposition festzustellen. Zur Unterscheidung der einzelnen Referenz-Markierungen dient eine weitere Spur, die zwei annähernd sinusförmige, in der Phase um 90° versetzte Signale mit einer Periode pro Umdrehung des Rotors erzeugt. Durch diese Signale läßt sich die jeweils angefahrene Referenz-Markierung identifizieren, die die absolute Winkelposition für die inkrementale Zählung bestimmt. Der mögliche Mindestabstand der Referenz-Markierungen und damit der notwendige Anfahrweg bei Betriebsbeginn ist durch die Winkelgenauigkeit der sinusförmigen Signale vorgegeben.

Aus der EP-A-0 276 402 ist ein Winkelmeßsystem bekannt, bei welchem mehrere Spuren auf einer Rotorscheibe angeordnet sind, die durch optoelektrische Aufnehmer abgetastet werden. Die Spuren erzeugen in den Aufnehmern jeweils dreieckförmige periodische Signale, wobei die Zahl der Perioden jeder Spur ein ganzzahliges Vielfaches der Periodenzahl der vorangehenden Spur ist. Jedem Winkelwert einer Spur ist eindeutig eine Periode des Signals der nachfolgenden Spur zugeordnet. Die in den Aufnehmern erzeugten analogen Signale werden in digitale Winkelwerte umgewandelt und die Winkelwerte der einzelnen Spuren werden zu einem die absolute Winkelposition des Rotors darstellenden digitalen Wort zusammengesetzt. Die höchstauflösende letzte Spur, d. h. die Spur mit der größten Periodenzahl pro Umdrehung des Rotors kann außer zu dieser Bestimmung der absoluten Winkelposition des Rotors auch als Inkrementalspur verwendet werden, um die Drehung des Rotors in den inkrementalen Schritten der Signalperioden dieser Spur zu zählen. Die mit hoher Genauigkeit ermittelte absolte Winkelposition wird als mehrstelliges digitales Wort nur träge ausgegeben. Die inkrementale Winkelpositionsbestimmung erfolgt nur mit der Genauigkeit der Teilungsschritte der Inkrementalspur.

Der Erfindung liegt die Aufgabe zugrunde, ein Drehwinkelmeßsystem zur Verfügung zu stellen, daß die absolute Winkelposition mit hoher Auflösung und Genauigkeit erfaßt und diese genaue Winkelinformation auch bei hohen Drehzahlen zur Verfügung stellt.

Diese Aufgabe wird erfindungsgemäß gelöst durch ein Drehwinkelmeßsystem mit den Merkmalen des Anspruchs 1.

Vorteilhafte Ausführungsformen der Erfindung sind in den abhängigen Ansprüchen angegeben.

Bei dem erfindungsgemäßen Drehwinkelsystem weist der Rotor mehrere Spuren auf, die jeweils abgetastet werden, um sinusförmige oder zumindest annähernd sinusförmige elektrische Signale zu erhalten. Die Abtastung kann je nach Art der Maßverkörperung auf dem Rotor optisch, magnetisch oder in sonstiger an sich bekannter Weise erfolgen. Jede Spur wird dabei zumindest zweifach abgetastet, um in der Phase gegeneinander versetzte elektrische Signale zu erhalten, vorzugsweise wenigstens zwei um 90° gegeneinander versetzte Signale. Aus den gegeneinander versetzten Signalen läßt sich jeweils die Winkelposition bestimmen. Werden um 90° gegeneinander versetzte Signale verwendet, also ein Sinus- und ein Kosinus-Signal, so kann aus diesen Signalen die jeweilige Winkelposition durch Bildung des Arcustanges abgeleitet werden.

Wesentlich für die Erfindung ist dabei, daß die Teilung jeder Spur ein ganzzahliges Vielfaches der Teilung der vorhergehenden Spur ist. Im Hinblick auf die einfache Auswertung werden dabei insbesondere Teilungen verwendet, die jeweils das 2ⁿ-fache der Teilung der vorhergehenden Spur betragen. In der Auswerte-Elektronik werden aus den Sinus- und Kosinus-Signalen der einzelnen Spuren jeweils digitale Winkelwerte gebildet. Diese digitalen Winkelwerte der einzelnen Spuren werden entsprechend dem Teilungsverhältnis dieser Spuren zu einem digitalen Wort aneinandergefügt, welches die absolute Winkelposition des Rotors darstellt. Die Genauigkeit und Linearität der Signale der einzelnen Spuren und das Teilungsverhältnis der aufeinanderfolgenden Spuren werden dabei so aufeinander abgestimmt, daß jedem Winkelwert einer Spur eindeutig eine Periode des Signals der nachfolgenden Spur zugeordnet ist. Die erste Spur liefert ein Sinus- und Kosinus-Signal mit nur einer Periode pro Umdrehung des Rotors. Der aus diesen Signalen abgeleitete Winkelwert zeigt als Vektor eines Polarkoordinatensystems auf ein Polarkoordinatensystem, welches einer Signal-Periode der nachfolgenden Spur mit der nächst feineren Teilung entspricht. Der Winkelwert der nachfolgenden Spur innerhalb dieser Periode ergibt somit eine Feinanzeige zu dem Winkelwert der ersten Spur. Der Winkelwert der zweiten Spur weist wiederum als Vektor eines Polarkoordinatensystems auf ein einer Signal- Periode der nachfolgenden dritten Spur entsprechendes Polarkoordinatensystem usw. Die letzte Spur ist dabei die Inkrementalspur, die die gewünschte feinste Auflösung der Winkelteilung darstellt. Da die Linearität der Interpolation der Sinus- und Kosinus-Signale der einzelnen Spuren nur so genau sein muß, daß jedem Winkelwert eindeutig eine Periode der nachfolgenden feineren Spur zugeordnet ist, läßt sich ohne höhere Anforderungen an die Genauigkeit der groben Spuren die absolute Winkelposition mit einer beliebigen gewünschten Genauigkeit bestimmen, wobei diese Genauigkeit nur durch die Teilung der feinsten Spur, nämlich der Inkrementalspur, und die Linearität der Interpolation der Signale dieser Spur bestimmt und begrenzt ist.

Selbstverständlich ist neben dieser zumindest systematisch nicht begrenzten Möglichkeit der Verbesserung der Auflösung auch eine Vergrößerung des Meßbereichs auf mehrere Umdrehungen des Rotors durch eine an sich bekannte Multiturn-Anordnung möglich.

Das erfindungsgemäße Prinzip ist an sich für jede Art von Verwirklichung der Maßverkörperung und Abtastung dieser Maßverkörperung geeignet, insbesondere auch für magnetische, kapazitive und induktive Abtastungen.

In einer bevorzugten Ausführungsform wird eine optische Abtastung einer Rotorscheibe in Durchlicht verwendet. Vorzugsweise werden dabei die Spuren mit Fotodioden abgetastet, wobei die Spuren so angeordnet sind, daß die Fotodioden sämtlicher Spuren in einem kompakten monolithischen Array ausgebildet sind. Neben den konstruktiven Vorteilen ermöglicht dies insbesondere auch die optoelektronische Abtastung mit nur einer einzigen Lichtquelle. Die Abtastung mit einer einzigen Lichtquelle hat den Vorteil, daß die analogen Sinus- und Kosinus-Signale nicht durch sich relativ zueinander ändernde Lichtintensitäten beeinflußt werden. Zudem ergibt sich ein wesentlicher schaltungstechnischer Vorteil, da nur die Intensität einer einzigen Lichtquelle geregelt werden muß. Die Regelung der Intensität dieser Lichtquelle erfolgt zweckmäßigerweise aufgrund einer analogen Quadrierung und Addierung des Sinus- und des Kosinus-Signals.

Die Auswerte-Elektronik des erfindungsgemäßen Drehwinkelmeßsystems stellt in einem Parameterkanal das digitale Wort der absoluten Winkelposition zur Verfügung. Es kann somit jederzeit die absolute Winkelposition des Rotors festgestellt werden. Insbesondere steht beim Einschalten des Systems diese Information zur Verfügung, ohne daß auf eine Referenz-Markierung Bezug genommen werden muß. Auch während des Betriebs steht die absolute Winkelpositions-Information jederzeit über den Parameterkanal zur Verfügung. Um das Drehwinkelmeßsystem auch für hohe Drehzahlen geeignet zu machen, stellt die Auswerte-Elektronik zusätzlich in einem Prozeßkanal das analoge Signal der letzten Spur, d.h. der Inkrementalspur, zur Verfügung. Im aktiven Betrieb, insbesondere bei hohen Drehzahlen, wird diese inkrementale Information zur Auswertung der Winkelposition und Winkelgeschwindigkeiten verwendet. Da die absolute Winkelinformation als mehrstelliges digitales Wort eine größere Trägheit in der Auswertung bewirkt, wird diese im wesentlichen als Startinformation für die inkrementale Zählung verwendet. Außerdem stellt diese ständig zur Verfügung stehende absolute Winkelinformation eine Redundanz zu der inkremental gemessenen Winkelinformation dar, die im Hintergrund zu einer ständigen Plausibilitätsprüfung und damit zu einer Überwachung der inkrementalen Winkelmessung verwendet werden kann.

Im folgenden wird die Erfindung anhand eines in der Zeichnung dargestellten Ausführungsbeispiels näher erläutert. Es zeigen :
- Figur 1: schematisch ein Drehwinkelmeßsystem,
- Figur 2: vergrößert einen Ausschnitt der Spuren der optischen Codescheibe in gestreckter Darstellung und das Fotodioden-Array und

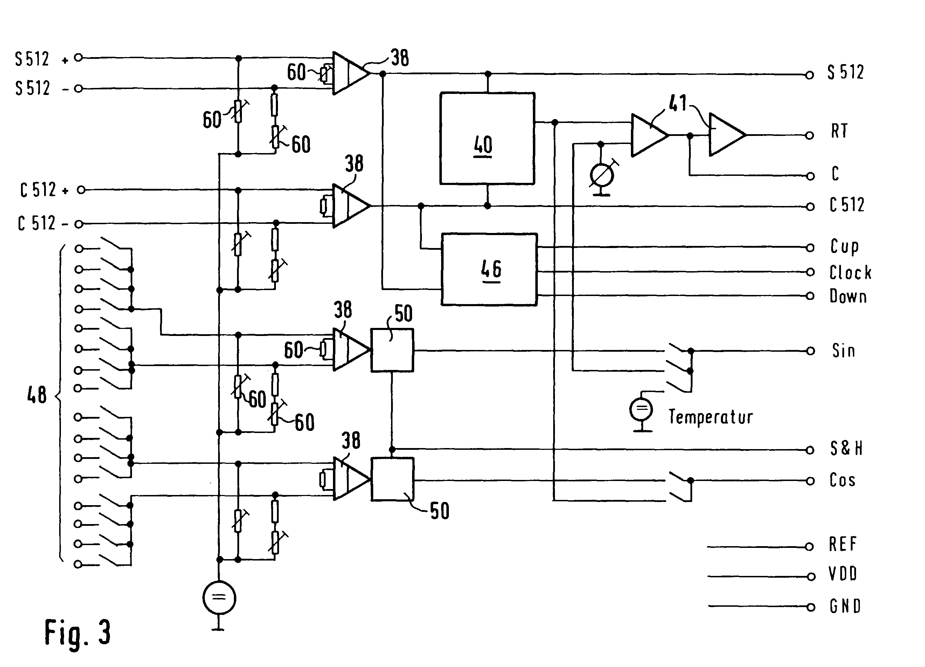

- Figur 3: eine Prinzip-Schaltung der Auswerte-Elektronik.

Das Drehwinkelmeßsystem weist eine Welle 10 auf, die mit dem zu messenden Objekt verbunden wird, beispielsweise mit der Welle eines Servomotors gekoppelt wird. Auf der Welle 10 sitzt drehfest eine optische Codescheibe 12. Die Codescheibe 12 trägt später beschriebene lichtdurchlässige Spuren. In einem Bereich werden diese Spuren von einer einzigen Lichtquelle 14, die vorzugsweise eine Leuchtdiode ist, und einer Kondensor-Linse 16 ausgeleuchtet. Auf der der Lichtquelle 14 und der Kondensor-Linse 16 entgegengesetzten Seite der Codescheibe 12 ist in dem ausgeleuchteten Bereich ein Fotodioden-Array 18 angeordnet, welches in der nachfolgend beschriebenen Weise aufgebaut ist.

Die Codescheibe 12 weist eine innere erste Spur 20 auf, die aus vier konzentrischen lichtdurchlässigen Einzelspuren besteht. Jede dieser Einzelspuren wird durch zwei exzentrisch gegeneinander versetzte Kreise begrenzt. Jede der Einzelspuren dieser ersten Spur wird durch eine Fotodiode 22 des Fotodiodenarrays 18 abgetastet. Die Begrenzung der Einzelspuren der ersten Spur 20 durch exzentrische Kreise ergibt bei Drehung der Codescheibe 12 eine Flächenabdeckung der Einzelspuren mit den rechteckigen lichtempfindlichen Flächen der Fotodioden 22, die im wesentlichen einer Sinus-Funktion folgt. Die vier Einzelspuren der ersten Spur 20 sind jeweils um 90° auf der Codescheibe 12 versetzt, so daß die durch die in derselben Winkelposition radial angeordneten Fotodioden 22 erhaltenen Sinus-Signale jeweils um 90° in der Phase gegeneinander versetzt sind. Die vier Fotodioden 22 der ersten Spur 20 ergeben somit elektrische Signale, die einer Sinus-Funktion, einer Minussinus-Funktion, einer Kosinus-Funktion und einer Minuskosinus-Funktion entsprechen. Alle diese Signale der Fotodioden 22 der ersten Spur 20 weisen jeweils eine Periode pro Umdrehung der Codescheibe 12 auf.

Konzentrisch außerhalb der ersten aus vier Einzelspuren bestehenden Spur 20 ist eine zweite lichtdurchlässige Spur 24 angeordnet. Diese zweite Spur 24 besteht aus sich in Umfangsrichtung aneinanderreihenden segmentbogenförmigen lichtdurchlässigen Feldern mit einer gegenüber der ersten Spur 20 achtfach feineren Teilung. Diese zweite Spur 24 wird durch vier Fotodioden 26 mit rechteckiger lichtempfindlicher Fläche abgetastet. Die Flächenüberdeckung der Fotodioden 26 und der Segmentbögen der zweiten Spur 24 ergeben bei Drehung der Codescheibe 12 ebenfalls sinusförmige Signale mit acht Perioden pro Umdrehung der Codescheibe 12 entsprechend der Teilung der zweiten Spur 24. Die vier Fotodioden 26, die die zweite Spur 24 abtasten, sind in Umfangsrichtung im Winkel so gegeneinander versetzt, daß ihre Abtastsignale jeweils um 90° gegeneinander in der Phase versetzt sind, so daß sich ebenfalls sinus-, minussinus-, kosinus- und minuskosinus-förmige Signalverläufe ergeben.

Konzentrisch außerhalb der zweiten Spur 24 ist eine dritte Spur 28 angeordnet, die entsprechend gestaltet ist wie die zweite Spur, jedoch gegenüber dieser eine achtfach feinere Teilung aufweist. Die dritte Spur 28 wird durch Fotodioden 30 abgetastet, die dementsprechend sinusförmige elektrische Signale mit 64 Perioden pro Umdrehung der Codescheibe 12 erzeugen. Die Fotodioden 30 sind ebenfalls in Umfangsrichtung im Winkel so versetzt, daß sie jeweils um 90° in der Phase gegeneinander versetzte elektrische Signale erzeugen. Wegen der geringeren radialen Breite der Segmentbögen der dritten Spur 28 sind 16 Fotodioden 30 vorgesehen, um eine ausreichende Lichtintensität zu erhalten. Jeweils vier Fotodioden 30 mit entsprechender Phasenlage der elektrischen Signale sind gruppenweise zusammengeschaltet.

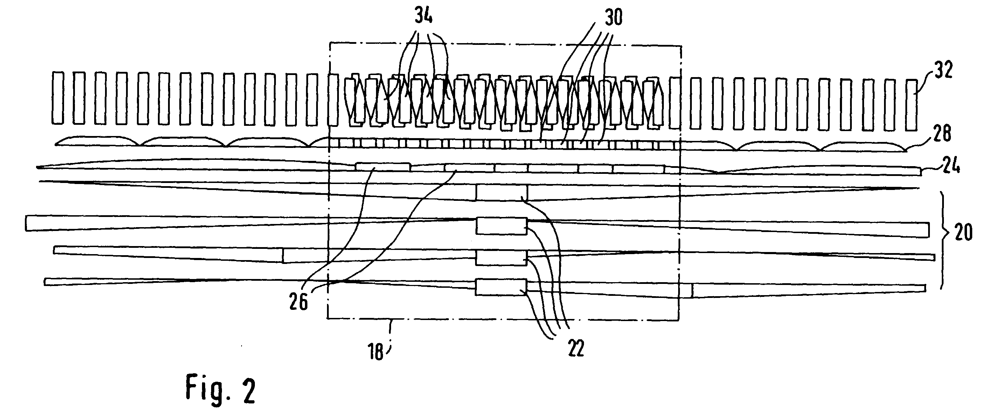

Konzentrisch außerhalb der dritten Spur 28 ist eine letzte Spur 32 angeordnet, die wiederum eine gegenüber der dritten Spur 28 achtfach feinere Teilung aufweist. Da eine segmentbogenförmige Ausbildung der vierten Spur 32 wegen dieser feinen Teilung schwierig herstellbar ist, wird die äußerste Spur 32 durch eine Strichteilung gebildet. Die Fotodioden 34, die diese äußerste Spur 32 abtasten, weisen eine sinusbogenförmige lichtempfindliche Fläche auf, so daß die Abtastung der Strichteilung der Spur 32 mit diesen Fotodioden 34 ebenfalls zu einem sinusförmigen elektrischen Signal führt. Aufgrund der Teilung bei dieser äußeren Spur 32 ergeben sich 512 Perioden des sinusförmigen elektrischen Signals Pro Umdrehung der Codescheibe 12. Die äußere Spur 32 wird durch die in Umfangsrichtung im Winkel versetzt angeordneten Fotodioden 34 so abgetastet, daß sich auch hier vier jeweils um 90° in der Phase versetzte Signale ergeben. Um die nötige Lichtintensität zu empfangen, sind 32 Fotodioden 34 vorgesehen, wobei jeweils die in der Phase des elektrischen Signals übereinstimmenden Fotodioden zusammengeschaltet sind. Um eine kompakte Anordnung der Fotodioden 34 zu erhalten, sind die spitzen Sinusbögen der jeweils aufeinanderfolgenden Fotodioden 34 um 180° gedreht gegeneinander gerichtet, so daß zwei Reihen von Fotodioden 34 kammartig ineinandergreifen, wie dies in Figur 2 zu erkennen ist.

Die Fotodioden 22, 26, 30 und 34 sind monolithisch in dem Fotodioden-Array 18 zusammengefaßt. Dadurch ist ein kompakter Aufbau möglich.

In der bisher beschriebenen Ausführung ist das Drehwinkelmeßsystem als Singleturn-Meßsystem aufgebaut, d.h. das Drehwinkelmeßsystem kann die Winkelposition der Welle 10 innerhalb einer Umdrehung absolut messen. Hierzu arbeitet das Drehwinkelmeßsystem in folgender Weise.

Die von den Fotodioden 34 der äußersten letzten Spur 32 gewonnenen elektrischen Signale mit 512 Perioden werden der als integrierter Baustein ausgebildeten Auswerte-Elektronik 36 zugeführt. Dabei werden das Sinus-Signal S512+ und das Minussinus-Signal S512- einem Differenzverstärker 38 zugeführt, der die Spannungswerte der beiden Signale subtrahiert, so daß der Gleichspannungsanteil unterdrückt und ein Sinus-Signal S512 erhalten wird. In gleicher Weise werden das Kosinus-Signal C512+ und das Minuskosinus- Signal C512-einem Differenzverstärker 38 zugeführt, und ein Kosinus-Signal C512 ohne Gleichspannungsanteil erhalten. Das Sinus-Signal S512 und das Kosinus-Signal C512 werden einem Quadrierer und Addierer 40 zugeführt, in welchem ihre Quadratsumme gebildet wird, die das Quadrat der Vektorlänge des Winkelwertes der äußeren Spur 32 darstellt. Diese Quadratsumme wird als Istwert für einen Integralregler 41 verwendet, der die von dem Fotodioden- Array 18 empfangene Lichtintensität der Lichtquelle 14 konstant regelt.

Weiter werden das analoge Sinus-Signal S512 und das analoge Kosinus-Signal C512 einem Operationsverstärkertreiber 42 zugeführt, der das analoge Winkelsignal der äußersten Spur 32 an einem Analogausgang 44 zur Verfügung stellt.

Weiter werden das Sinus-Signal S512 und das Kosinus-Signal C512 einem Diskriminator 46 zugeführt, der diese Signale diskriminiert und in digitale Zählinkremente wandelt, die an einem Clock-Ausgang zur Verfügung stehen. Weiter analysiert der Diskriminator 46 aus den Sinus- und Kosinus-Signalen die Drehrichtung der Welle 10 und liefert entsprechend ein "Count Up"- oder "Down"-Schaltsignal. Diese Signale werden in einem später beschriebenen Microcontroller 52 dazu verwendet, eine Bewegung der Welle 10 bei der Bildung der absoluten Winkelposition zu berücksichtigen.

Die äußerste Spur 32 mit der 512er Teilung stellt somit ein inkrementales Winkelsignal zur Verfügung, dessen Genauigkeit sich ergibt aus der Teilung mit 512 Perioden (9bit) und der Interpolation des sinusförmigen Signals. Die Genauigkeit der Interpolation einer Periode ist besser als ein Prozent, so daß sich die Genauigkeit der Winkelangabe weiter um ca. 7bit auf insgesamt 16bit bzw. 20 Bogensekunden erhöht. Mit einem vertretbaren Aufwand ist noch eine Steigerung der Gesamtauflösung pro Umdrehung auf 21bit bzw. 0,6 Bogensekunden möglich.

Ein wesentlicher Vorteil des Analogausgangs 44 besteht darin, daß auch bei hohen Drehzahlen zu dem Motorregler nur relativ niedrige Frequenzen übertragen werden müssen. Bei einer Drehzahl von 6000 UPM ergibt sich für die 512 Perioden des Analogsignals pro Umdrehung nur eine Frequenz von 51,2 kHz, die übertragen werden muß.

Um die absolute Winkelposition zu bestimmen, werden weiter die elektrischen Signale der Fotodioden 22, 26, 30 und 34 der Auswerte-Elektronik 36 über Eingänge 48 zugeführt. Auch hier werden in der oben beschriebenen Weise die Sinus- und Minussinus-Signale und ebenso Kosinus- und Minuskosinus-Signale Differenzverstärkern 38 zugeführt, um Sinus- und Kosinus-Signale ohne Gleichspannungsanteil zu erhalten. Um den Schaltungsaufwand zu verringern, sind die Fotodioden 22, 26, 30 und 34 seriell an die Differenzverstärker 38 anschaltbar. Zwei Sample- und Hold-Verstärker 50, die den Differenzverstärkern 38 nachgeschaltet sind, ermöglichen dabei die gleichzeitige Abtastung der Sinus- und Kosinus-Signale sämtlicher Spuren auch bei großen Drehzahlen, um die sich aus diesen Sinus- und Kosinus-Signalen ergebenden Vektorwinkel sämtlicher Spuren in einem der Auswerte-Elektronik 36 nachgeschalteten Microcontroller 52 zu dem digitalen Wort der absoluten Winkelposition zusammenzufügen.

Die Auswerte-Elektronik 36 stellt somit einerseits aus der letzten Spur 32 mit der feinsten Teilung abgeleitete Inkremental-Signale zur Verfügung. Diese stehen als analoges sinusförmiges Signal mit 512 Perioden pro Umdrehung zur Verfügung, welches über den Operationsverstärkertreiber 42 unmittelbar zum Motorverstärker des Servomotors übertragen wird. Weiter steht die sich aus sämtlichen Spuren ergebende absolute Winkelposition zur Verfügung, die in dem Microcontroller 52 zu einem digitalen Wort zusammengefügt wird, welches über eine Schnittstelle 54 in einem definierten Datenformat an einem Parameterausgang 56 zur Verfügung steht.

Zur Vervollständigung des Drehwinkelmeßsystems ist dem Microcontroller 52 noch ein EEPROM 58 als Speicher zugeordnet. In diesem EEPROM 58 sind alle gerätespezifischen Informationen, wie Offset, Verstärkung, Relativlage usw. abgelegt. Beim Einschalten des Drehwinkelmeßsystems holt der Microcontroller 52 aus dem seriellen EEPROM 58 zunächst alle diese Informationen und aktiviert mit diesen Werten die Auswerte-Elektronik 36. Hierzu sind insbesondere die Differenzverstärker 38 mit einzeln digital einstellbaren Potentiometern 60 versehen. Dadurch kann insbesondere die Länge des Winkelvektors der Inkrementalspur 32 eingestellt werden, um Einflüsse der Temperatur der Abtastung, der Änderung der Lichtintensität der Lichtquelle 14 infolge von Alterung und der Verschmutzung der Codescheibe 12 auszugleichen.

Die absolute Winkelposition dient als jederzeit und in jeder Stellung der Welle 10 sofort zur Verfügung stehende Referenz für die inkrementale Winkelzählung. Darüber hinaus kann die absolute Winkelposition auch während des Betriebs, selbst bei sehr hohen Drehzahlen, jederzeit abgefragt werden. Dadurch ist auch eine Kontrolle der schnellen inkrementalen Winkelmessung möglich. Zu einem vorgegebenen Synchronisationszeitpunkt werden der inkrementale Winkelwert und die Signalwerte sämtlicher Spuren festgehalten (Capture latch) und in einem anschließenden langsameren Synchronisationszyklus verglichen. Eine solche Plausibilitätskontrolle der für die eigentliche Steuerung verwendeten inkrementalen Drehwinkelmessung kann ständig im Hintergrund mitlaufen.

Das vorstehend beschriebene Drehwinkelmeßsystem kann ohne weiteres von einer Singleturn-Messung auf eine Multiturn-Messung erweitert werden, wenn die absolute Winkelposition über mehrere Drehungen der Welle 10 gemessen werden soll.

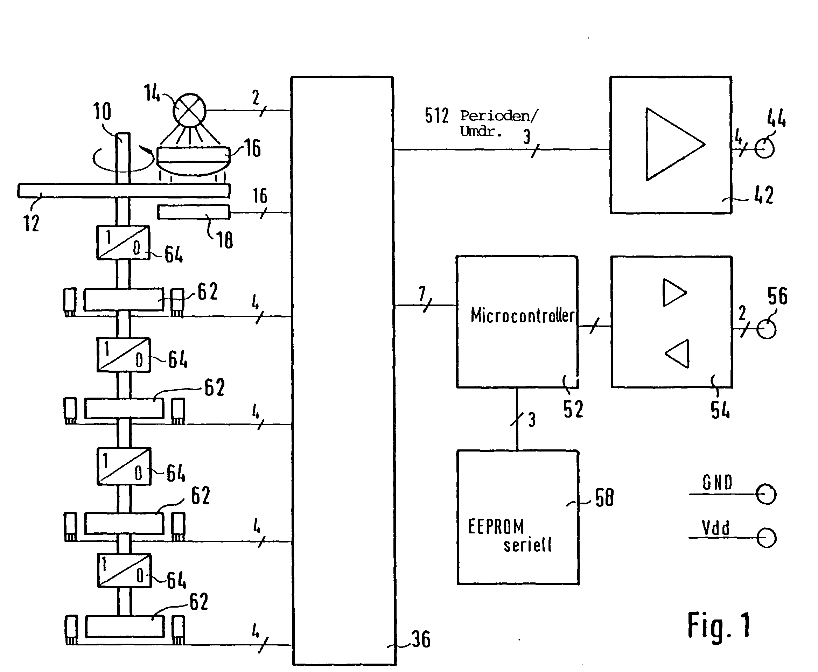

Wie Figur 1 zeigt, wird hierzu an die Welle 10 drehsteif ein Multiturn-System angekuppelt. Dieses besteht in an sich bekannter Weise aus über Untersetzungsgetriebe 64 hintereinandergeschalteten Singleturn-Absolut-Winkelgebern 62. In dem in Figur 1 dargestellten Ausführungsbeispiel sind vier Multiturn-Stufen vorgesehen, die jeweils ein Untersetzungsverhältnis von 1:2³ aufweisen. Es kann damit die Winkelposition über 4096 Umdrehungen der Welle 10 absolut bestimmt werden. In dem dargestellten Ausführungsbeispiel sind die Absolut-Winkelgeber 62 durch Magnetscheiben mit einer entsprechenden Teilung gebildet, die mittels Hall-Magnetsensoren abgetastet werden. Auch die Abtastsignale der Multiturn-Absolut-Winkelgeber 62 werden der Auswerte-Elektronik 36 zugeführt und in dem Microcontroller 52 zu dem digitalen Wort der absoluten Winkelposition hinzugefügt.

## Patentansprüche

1. Drehwinkelmeßsystem, mit einem Rotor (12), mit wenigstens drei dem Rotor (12) zugeordneten Spuren (20, 24, 28, 32), die in zugeordneten Aufnehmern (22, 26, 30, 34) jeweils zwei annähernd sinusförmige in der Phase vorzugsweise um 90° gegeneinander versetzte elektrische Signale erzeugen, wobei die erste Spur (20) mit der gröbsten Teilung elektrische Signale mit einer Periode pro Umdrehung des Rotors (12) erzeugt, wobei die Teilung jeder Spur (24, 28, 32) ein ganzzahliges Vielfaches der Teilung der jeweils vorhergehenden Spur (20, 24, 28) ist und jedem Winkelwert einer Spur (20, 24, 28) eindeutig eine Periode der Signale der jeweils nachfolgenden Spur (24, 28, 32) zugeordnet ist, und mit einer Auswerteelektronik (36, 52), die aus den analogen Signalen der Spuren (20, 24, 28, 32) digitale Winkelwerte bildet und aus diesen Winkelwerten der einzelnen Spuren (20, 24, 28, 32) ein die absolute Winkelposition des Rotors (12) darstellendes, digitales Wort bildet, dadurch gekennzeichnet, daß die Auswerteelektronik (36, 52) das digitale Wort der absoluten Winkelposition in einem Parameterkanal (56) und das analoge elektrische Signal der letzten Spur (32) mit der feinsten Teilung in einem Prozeßkanal (44) zur Verfügung stellt.

2. Drehwinkelmeßsystem nach Anspruch 1, bei dem der Rotor eine Codescheibe (12) ist, die lichtdurchlässige Spuren (20, 24, 28, 32) aufweist, die durch eine Lichtquelle (40) beleuchtet und durch Fotodioden (22, 26, 30, 34) abgetastet werden, dadurch gekennzeichnet, daß die Spuren (20, 22, 28) mit gröberer Teilung durch periodische Bogensegmente gebildet sind und durch Fotodioden (22, 26, 30) mit rechteckiger lichtempfindlicher Fläche abgetastet werden und daß die Spuren (32) mit feiner Teilung als Strichteilung ausgebildet sind und durch Fotodioden (34) mit sinusbogenförmiger lichtempfindlicher Fläche abgetastet werden.

3. Drehwinkelmeßsystem nach Anspruch 2, dadurch gekennzeichnet, daß sämtliche Fotodioden (22, 26, 30, 34) in einem monolithischen Fotodioden-Array (18) ausgebildet sind und nur eine einzige Lichtquelle (14) zur Ausleuchtung sämtlicher Spuren (20, 24, 28, 32) dient.

4. Drehwinkelmeßsystem nach Anspruch 3, dadurch gekennzeichnet, daß die Intensität der Lichtquelle (14) durch die Auswerte-Elektronik (36) so geregelt wird, daß die Summe der Quadrate der jeweils um 90° in der Phase versetzten elektrischen Signale der letzten Spur (32) konstant gehalten ist.

5. Drehwinkelmeßsystem nach einem der vorhergehenden Ansprüche, dadurch gekennzeichnet, daß jede Spur (20, 24, 28, 32) vier jeweils um 90° in der Phase gegeneinander verschobene elektrische Signale erzeugt und daß die jeweils um 180° gegeneinander versetzten Signale in einem Differenzverstärker (38) subtrahiert werden, um die beiden um 90° gegeneinander versetzten Signale zu erhalten.

6. Drehwinkelmeßsystem nach einem der Ansprüche 2 bis 5, dadurch gekennzeichnet, daß die erste Spur (20) mit der gröbsten Teilung aus vier konzentrischen, im Winkel gegeneinander versetzten Einzelspuren besteht, die durch radial in gleicher Winkelstellung angeordnete Fotodioden (22) abgetastet werden, während die Spuren (24, 28, 32) mit der feineren Teilung jeweils nur aus einer Spur bestehen und durch in Umfangsrichtung im Winkel gegeneinander versetzt angeordnete Fotodioden (26, 30, 34) abgetastet werden.

7. Drehwinkelmeßsystem nach einem der vorhergehenden Ansprüche, dadurch gekennzeichnet, daß der Auswerte-Elektronik (36) ein Microcontroller (52) zugeordnet ist, der die Winkelwerte der einzelnen Spuren (20, 24, 28, 32) berechnet und aus diesen das digitale Wort der absoluten Winkelposition bildet und die Abfrage und Ausgabe des digitalen Wortes steuert, daß dem Microcontroller (52) ein Speicher (58) zugeordnet ist, der die gerätespezifischen Daten speichert, und daß der Microcontroller (52) die Auswerte-Elektronik (36) entsprechend den im Speicher (58) gespeicherten Werten abgleicht.

8. Drehwinkelmeßsystem nach Anspruch 7, dadurch gekennzeichnet, daß die Auswerte-Elektronik digital einstellbare Potentiometer (60) zum Abgleichen der elektrischen Signale der einzelnen Spuren (20, 24, 28, 32) aufweist.

9. Drehwinkelmeßsystem nach einem der vorhergehenden Ansprüche, dadurch gekennzeichnet, daß an den Rotor (10,12) eine oder mehrere Singleturn-Absolut-Winkelgeber (62) über Untersetzungsgetriebe (64) drehsteif hintereinander gekuppelt sind und daß die absolute Winkelposition dieser Winkelgeber (62) für die Auswerte-Elektronik (36) dem digitalen Wort der absoluten Winkelposition des Rotors angefügt werden.

## Claims

1. Angular measurement system, having a rotor (12), having at least three tracks (20, 24, 28, 32) associated with the rotor (12) which generate, in associated pickups (22, 26, 30, 34), two approximately sinusoidal electrical signals which each are preferably offset by 90° in phase with respect to one another, wherein the first track (20) having the coarsest graduation generates electrical signals having one cycle per revolution of the rotor (12), wherein the graduation of each track (24, 28, 32) is an integral multiple of the graduation of the respective preceding track (20, 24, 28) and one cycle of the signals of the respective subsequent track (24, 28, 32) is definitely associated with each angular value of a track (20, 24, 28), and having an electronic evaluation system (36, 52) which forms digital angular values from the analogue signals of the tracks (20, 24, 28, 32) and forms a digital word representing the absolute angular position of the rotor (12) from said angular values of the individual tracks (20, 24, 28, 32), characterized in that the electronic evaluation system (36, 52) makes the digital word of the absolute angular position available in a parameter channel (56) and the analogue electrical signal of the last track (32) having the finest graduation available in a process channel (44).

2. Angular measurement system according to Claim 1, in which the rotor is a code disk (12) which has light) transparent tracks (20, 24, 28, 32) which are illuminated by a light source (40) and are scanned by photodiodes (22, 26, 30, 34), characterized in that the tracks (20, 22, 28) having coarser graduation are formed by periodic arc segments and are scanned by photodiodes (22, 26, 30) having rectangular photosensitive surface and in that the tracks (32) having fine graduation are formed as line graduation and are scanned by photodiodes (34) having sinusoidal-arc-shaped photosensitive surface.

3. Angular measurement system according to Claim 2, characterized in that all the photodiodes (22, 26, 30, 34) are formed in a monolithic photodiode array (18) and only a single light source (14) serves to illuminate all the tracks (20, 24, 28, 32).

4. Angular measurement system according to Claim 3, characterized in that the intensity of the light source (14) is regulated by the electronic evaluation system (36) in such a way that the sum of the squares of the electrical signals of the last track (32), which signals are each offset by 90° in phase, is kept constant.

5. Angular measurement system according to one of the preceding claims, characterized in that each track (20, 24, 28, 32) generates four electrical signals which are each shifted by 90° in phase with respect to one another and in that the signals which are each offset by 180° with respect to one another are subtracted in a differential amplifier (38) in order to obtain the two signals which are offset by 90° with respect to one another.

6. Angular measurement system according to one of Claims 2 to 5, characterized in that the first track (20) with the coarsest graduation comprises four concentric individual tracks which are offset in angle with respect to one another and which are scanned by photodiodes (22) disposed radially in the same angular position, whereas the tracks (24, 28, 32) with the finer graduation each comprise only one track and are scanned by photodiodes (26, 30, 34) which are disposed so as to be offset in angle with respect to one another in the circumferential direction.

7. Angular measurement system according to one of the preceding claims, characterized in that a microcontroller (52) is associated with the electronic evaluation system (36), which microcontroller calculates the angular values of the individual tracks (20, 24, 28, 32) and forms the digital word of the absolute angular position from said angular values and controls the sampling and outputting of the digital word, in that a memory (58) is associated with the microcontroller (52), which memory stores the specific data for the apparatus, and in that the microcontroller (52) adjusts the electronic evaluation system (36) in accordance with the values stored in the memory (58).

8. Angular measurement system according to Claim 7, characterized in that the electronic evaluation system has digitally adjustable potentiometers (60) for adjusting the electrical signals of the individual tracks (20, 24, 28, 32).

9. Angular measurement system according to one of the preceding claims, characterized in that one or more single-turn absolute angle detectors (62) are coupled to the rotor (10, 12) one behind the other by means of reducing gears (64) in a torsion-proof manner and in that the absolute angular position of said angle detectors (62) is added to the digital word of the absolute angular position of the rotor for the electronic evaluation system (36).

## Revendications

1. Système de mesure d'angle de rotation comprenant un rotor (12) ayant au moins trois pistes (20, 24, 28, 32) associées au rotor (12), auxquelles sont associés des capteurs (22, 26, 30, 34) générant chaque fois deux signaux électriques sensiblement de forme sinusoïdale, déphasés l'un par rapport à l'autre de préférence de 90°, la première piste (20) générant, par une division grossière, les signaux électriques d'une période par rotation du rotor (12), la division de chaque piste (24, 28, 32) étant un multiple entier de la division de la piste précédente (20, 24, 28), et à chaque valeur angulaire d'une piste (20, 24, 28) est associée de manière biunivoque une période des signaux de la piste respectivement suivante (24, 28, 32), ainsi qu'une électronique d'exploitation (36, 52) qui forme des valeurs angulaires numériques à partir des signaux analogiques des pistes (20, 24, 28, 32) et, à partir de ces valeurs angulaires des différentes pistes (20, 24, 28, 32), forme un mot numérique représentant la position angulaire absolue du rotor (12), caractérisé en ce que l'électronique d'exploitation (36, 52) fournit le mot numérique de la position angulaire absolue dans un canal paramétrique (56), et le signal électrique analogique de la dernière piste (32), à la division la plus fine dans un canal de procédé (44).

2. Système de mesure d'angle de rotation selon la revendication 1, selon lequel le rotor est un disque de codage (12) comportant des pistes (20, 24, 28, 32) transparentes à la lumière, éclairées par une source lumineuse (40) et détectées par des photodiodes (22, 26, 30, 34), caractérisé en ce que les pistes (20, 22, 28) sont formées avec une division plus grossière par des segments d'arc périodiques et sont détectées par des photodiodes (22, 26, 30) à surface photosensible rectangulaire, et en ce que les pistes (32) ayant une division plus fine sont formées par une division au trait et sont détectées par des photodiodes (34) ayant une surface photosensible analogue à un arc sinusoïdal.

3. Système de mesure d'angle de rotation selon la revendication 2, caractérisé en ce que toutes les photodiodes (22, 26, 30, 34) sont réalisées sous la forme d'un réseau de photodiodes monolithique (18), et une seule source lumineuse (14) sert à éclairer toutes les pistes (20, 24, 28, 32).

4. Système de mesure d'angle de rotation selon la revendication 3, caractérisé en ce que l'intensité de la source lumineuse (14) est régulée par l'électronique d'exploitation (36) pour que la somme des carrés des signaux électriques respectivement déphasés de 90° de la dernière piste (32), soit maintenue constante.

5. Système de mesure d'angle de rotation selon l'une des revendications précédentes, caractérisé en ce que chaque piste (20, 24, 28, 32) génère quatre signaux électriques déphasés chaque fois de 90°, et en ce que les signaux chaque fois décalés de 180° sont retranchés dans un amplificateur de différence (38) pour obtenir les deux signaux déphasés de 90°.

6. Système de mesure d'angle de rotation selon l'une des revendications 2 à 5, caractérisé en ce que la première piste (20) ayant la division la plus grossière se compose de quatre pistes séparées, concentriques, décalées angulairement, détectées par des photodiodes (22) radiales, disposées suivant la même position angulaire, alors que les pistes (24, 28, 32) correspondant à une division plus fine ne se composent chaque fois que d'une piste détectée par des photodiodes (26, 30, 34) réparties de manière décalée angulairement dans la direction périphérique.

7. Système de mesure d'angle de rotation selon l'une des revendications précédentes, caractérisé en ce que l'électronique d'exploitation (36) comporte un microcontroleur (52) calculant les valeurs d'angle des différentes pistes (20, 24, 28, 32) et formant, à partir de celles-ci, le mot numérique de la position angulaire absolue, et commandant l'interrogation et l'émission du mot numérique, le microcontroleur (52) ayant une mémoire (58) qui enregistre les données caractéristiques de l'appareil, et le microcontroleur (52) équilibre l'électronique d'exploitation (36) en fonction des valeurs enregistrées dans la mémoire (58).

8. Système de mesure d'angle de rotation selon la revendication 7, caractérisé en ce que l'électronique d'exploitation comporte des potentiomètres (60) à réglage numérique pour compenser les signaux électriques des différentes pistes (20, 24, 28, 32).

9. Système de mesure d'angle de rotation selon l'une des revendications précédentes, caractérisé en ce que l'axe de rotor (10, 12) comporte solidairement en rotation, l'un derrière l'autre, un ou plusieurs capteurs d'angle absolu à un seul tour (62), par l'intermédiaire de réducteurs (64), et la position angulaire absolue de ces capteurs d'angle (62) est ajoutée par l'électronique d'exploitation (36) au mot numérique de la position angulaire absolue du rotor.
